# EUROPÄISCHE PATENTSCHRIFT

(11) **EP 0 951 844 B1**
(45) Veröffentlichungstag und Bekanntmachung des Hinweises auf die Patenterteilung: **05.03.2003**
(21) Anmeldenummer: 99106312.4
(22) Anmeldetag: 26.03.1999
(51) Int. Cl.: A23L 2/52, A23L 2/66, A23L 1/305, A23L 1/302, A23L 2/60, A23L 1/304

(54) **Energy-Drink auf Fruchtsaftbasis**
Energy-drink based on fruit juices
Boisson énergétique à base de jus de fruits

(30) Priorität: 22.04.1998 DE 19817877
(43) Veröffentlichungstag der Anmeldung: 27.10.1999
(73) Patentinhaber: Berner, Hans-Günter, 29553 Edendorf (DE)
(72) Erfinder: Berner, Hans-Günter, 29553 Edendorf (DE)
(74) Vertreter: Biehl, Christian, Dipl.-Phys.

(56) Entgegenhaltungen:
- EP-A- 0 265 772
- EP-A- 0 484 266
- EP-A- 0 587 972
- EP-A- 0 768 043
- EP-A- 0 891 719
- WO-A-94/15488
- WO-A-97/02830
- WO-A-98/00024

## Beschreibung

Die Erfindung betrifft ein Energy-Fruchtsaft-Getränk, in dem als sog. Energy-Drink Nähr-, Vital-, Energieaufbauund Schutzstoffe enthalten sind, die die Hirn- und Nervenzellen des Menschen für eine langfristige, optimale Funktionsfähigkeit stärken.

Bekannt sind sogenannte "Fitness-Drinks", in denen beispielsweise die Vitamine A, C und E und Ballaststoffe zusammen mit einem Fruchtsaftgehalt, der häufig durch das Pürieren von Zitrusfrüchten gewonnen wird, dargeboten werden. Diese Fruchtsaftgetränke decken häufig in den Darreichungsformen von beispielsweise einem halben Liter den Tagesbedarf eines Erwachsenen an den zugesetzten Vitaminen mehrfach ab. Es ist jedoch bekannt, daß die lediglich überdosierte Gabe von Vitaminen außer der Verhinderung von Unterversorgung mit diesen Vitaminen keine Vorteile aufweist.

Mit Nährstoffen angereichte Zubereitungen sind schon von EP 0 768 046 und EP 0 891 719 her bekannt.

Der Erfindung liegt dagegen die Aufgabe zugrunde, insbesondere die Nervenzellen und die Zellen des Gehirns optimal mit allen von ihnen benötigten Stoffen zu versorgen.

Erfindungsgemäß wird dies durch einen Energy-Fruchtsaft-Getränk mit den Merkmalen des Hauptanspruches gelöst. Die Unteransprüche geben vorteilhafte Ausführungsformen an.

Die Verwendung von Kohlehydraten, insbesondere in einer nicht insulingängigen Form, ist insbesondere dann vorteilhaft, wenn Frutose mit Oligo-Fruktose kombiniert wird. Gleichzeitig sollten Eiweiße, wie z. B. Milchoder Molkeeiweiß, kombiniert mit Aminosäurenlieferanten in einer schnell verfügbaren Form, z. B. kurzkettigen Oligopeptiden, vorhanden sein. Die kurzkettigen Oligopeptide, die vorzugsweise pflanzlichen Ursprunges sind, sollten dahingehend ausgewählt werden, daß die nachstehenden Aminosäuren enthalten sind: Tyrosin, Phenylalanin, Tryprophan, Lysin, Arginin, Methionin, Serin, Isoleucin, Leucin und Glutaminsäure.

Schließlich sind an Vitaminen, Mineralstoffen und Spurenelementen der komplette B-Vitamin-Komplex, die Mineralstoffe Kalzium und Magnesium sowie die Spurenelemente Zink, Mangan, Chrom und Selen in einer Menge von - bezogen auf die empfohlenen Tagesdosis - 15 % bis zu 200 % der DGE-Empfehlung (siehe Anlage, S. 78 - 80, aus GU Nährwert Kalorien Tabelle, Elmadfa et al, Verlag Gräfe und Unzer, 1998) vorzusehen. D. h., daß Magnesium mit 30-350 mg, Calcium mit 100 bis 800 mg und die Spurenelemente Zink mit 12-15 mg, Mangan mit 2-4 mg, Chrom mit 50-200 µm und Selen mit 20-100 µm eingebracht werden sollten. Bei den Vitaminen werden Vitamin E mit 13 mg, B1 mit 1,2-1,4 mg, B2 mit 1,5-1,7mg, B6 mit 1,6-1,8 mg, Pantothensäure mit 8 mg, Folsäure mit 160 µm, B12 mit 5 µm, C mit 75 mg und Biotin mit 30-100 µm beigegeben.

Weiter sollten die Mineralstoffe in organischer Form als Calcium- und Magnesiumlactate und/oder als Spezialnährhefen wie Zink-, Mangan-, Chrom- und Selenhäfen vorliegen. Diese Hefen enthalten gleichzeitig einen großen Teil der B-Vitamine.

Schließlich sollten noch zur Verbesserung der Hirn- und Nervenzellenmembrane Phospholipide als Baustoffe zur Verfügung gestellt werden von zu ca. 70 % Phosphaditylserin und Phosphaditylcholin. Das Verhältnis von P-Serin zu P-Cholin sollte etwa 5 : 2 betragen. Diese Phospholipidstruktur läßt sich nur dann in ein Fruchtsaftgetränk einbringen, wenn Schutzstoffe (Antioxidantien) sowie Carrier für die Fettsäuren zur Verfügung gestellt werden. Zellmembranen und Phosolipide, also auch P-Serin und P-Cholin sind bevorzugte Reaktionspartner für freie Radikale. Sie müssen daher durch antioxidativ wirkende Vitamine und Spurenelemente bis zu ihrem Wirkungsort geschützt werden.

Zusätzlich wird ein Carrier für die Fettsäuren durch die Zellmembran benötigt. Hierzu eignet sich L-Carnitin. Als Antioxidantien werden die Vitamine C und E, das Pro-Vitamin A (Beta-Carotin) vorgeschlagen. Weiter hat sich gezeigt, daß die Zufügung von Flavonoiden aus roten und/oder blauen Früchte, wie Johannisbeeren, Kirschen, Holunderbeeren, Heidelbeeren die Wirkung der Schutzstoffe unterstützt.

In der nachfolgenden Beschreibung soll ein bevorzugtes Ausführungsbeispiel des erfindungsgemäßen Fruchtsaftgetränkes mit Mengen, die sich jeweils auf die empfohlene Tagesdosis beziehen:

Einer Grundsubstanz, die nach der Zusammenfügung mit Fruchtsaft aufgefüllt wird, werden neben 3 bis 15 g Fruktose, 3 bis 10 g Oligofruktose, 5 bis 15 g Milchund/oder Molkeeiweiß und 3 bis 10 g Oligopeptide beigegeben.

Weiter werden Vitamine C, B-Komplex, E, Biotin, Pro-Vitamin A, Folsäure, Pantothensäure, beigegeben, wobei bereits der niedrigere Wert ausreicht, die entsprechende antioxidative Wirkung für das P-Serin und das P-Cholin in ihren wenigstens empfohlenen Tagesdosen von 50 bis 20 mg zu gewährleisten.

Weiter wird empfohlen, Magnesiumlactat und Calciumlactat in dem Körper gut zugänglicher Form umgerechnet auf das reine Spurenelement entsprechend obige der DGE-Empfehlung zu 15 bis 30 % beizugeben. Zinkhefe, Manganhefe, Chromhefe und Selenhefe können in einem breiteren Verhältnis von 10 - 100 % umgerechnet auf die Stoffe selbst gemäß DGE-Empfehlung pro Tagesdosis zugesetzt werden.

Die Obergrenzen für Phosphaditylserin und Phosphsaditylcholin liegen bei 500 mg und 200 mg pro Tagesdosis. Schließlich sollte L-Carnitin in einer Menge von 10 - 200 mg pro Tagesdosis vorhanden sein.

Das Auffüllen mit gelben, roten oder blauen Fruchtsäften, einer oder mehrerer der Sorten schwarze Johannisbeere, rote Johannisbeere, Kirsche, Brombeere, Erdbeere, Heidelbeere, Holunderbeere, Apfelsine oder Maracuja kann dann nach Darreichungsform auf 100 - 500 ml erfolgen.

Bei einer Darreichungsform von 330 ml wird eine Zusammensetzung, mit 10 g Fruktose, 8 g Oligofruktose, 10 g Milch und/oder Molkeeiweiß, 6 g Oligopeptiden, 110 % der von der DGE für die genannten Vitamine empfohlenen Tagesmenge, 25 % der von der DGE für die genannten Mineralien empfohlenen Tagesmenge, 80 % der von der DGE für die genannten Spurenelemente empfohlenen Tagesmenge, 350 mg Phosphaditylserin, 150 mg Phosphaditylcholin und 170 mg L-Carnitin als Ausgangspunkt betrachtet.

Durch die insbesondere auf Nerven und Gehirnzellen wirkende zur Verfügungstellung aller Nähr- und Schutzstoffe ergibt sich eine bessere Konzentrations- und Reaktionsfähigkeit sowie ein gesteigertes Erinnerungsvermögen.

## Patentansprüche

1. Energy-Fruchtsaft-Getränk mit den folgenden Zusätzen:
- Kohlenhydrate aus Fruktose in Kombination mit Oligo-Fruktose,
- Eiweiße in Form kurzkettiger Oligo-Peptide,
- Vitamine des C und des B-Komplexes,
- Mineralstoffe und Spurenelemente, Antioxidantien,
**gekennzeichnet durch**
- Phospholipide und L-Carnitin.

2. Energy-Fruchtsaft-Getränk nach Anspruch 1, **dadurch gekennzeichnet, daß** die Oligopeptide wenigstens neun aus den der nachfolgend angegebenen Aminosäuren enthalten: Tyrosin, Phenylanalin, Tryptophan, Lysin, Arginin, Methionin, Serin, Isoleucin, Leucin, Glutaminsäure.

3. Energy-Fruchtsaft-Getränk nach einem der vorangehenden Ansprüche, **dadurch gekennzeichnet, daß** die Vitamine solche des C und des B-Komplexes, Vitamin E, das Pro-Vitamin A, Folsäure und Pantothensäure sind.

4. Energy-Fruchtsaft-Getränk nach einem der vorangehenden Ansprüche, **dadurch gekennzeichnet, daß** die Mineralstoffe in Magnesiumlactat und Calziumlactat enthalten sind.

5. Energy-Fruchtsaft-Getränk nach einem der vorangehenden Ansprüche, **dadurch gekennzeichnet, daß** die Spurenelemente in Zinkhefe, Manganhefe, Chromhefe und Selenhefe enthalten sind.

6. Energy-Fruchtsaft-Getränk nach einem der vorangehenden Ansprüche, **dadurch gekennzeichnet, daß** das die Phospholipide Phosphadigtylserin und Phosphaditylcholin sind.

7. Energy-Fruchtsaft-Getränk nach Anspruch 6, **dadurch gekennzeichnet, daß** der Anteil an Phosphaditylserin zum Anteil an Phosphaditylcholin im Verhältnis 5 : 2 steht.

8. Energy-Fruchtsaft-Getränk nach einem der vorangehenden Ansprüche, **gekennzeichnet durch** die folgende Zusammensetzung, bei der die angegebenen Mengen sich jeweils auf die empfohlene Tagesdosis beziehen:
- 3 bis 15 g Fruktose,
- 3 bis 10 g Oligofruktose,
- 5 bis 15 g Milch und/oder Molkeeiweiß,
- 3 bis 10 g Oligopeptide,
- 10 bis 200 % der von der DGE für die genannten Vitamine empfohlenen Tagesmenge,
- 15 bis 30% der von der DGE für die genannten Mineralien empfohlenen Tagesmenge,
- 10 - 100% der von der DGE für die genannten Spurenelemente empfohlenen Tagesmenge,
- 50 - 500 mg Phosphaditylserin,
- 20 - 200 mg Phosphaditylcholin,
- 10 - 200 mg L-Carnitin,
- auf 100 bis 500 ml Fruchtsaft aufgefüllt.

9. Energy-Fruchtsaft-Getränk in der Darreichungsform 330 ml nach Anspruch 8, **gekennzeichnet durch** eine Zusammensetzung, mit
- ca. 10 g Fruktose,
- ca. 8 g Oligofruktose,
- ca. 10 g Milch und/oder Molkeeiweiß,
- ca. 6 g Oligopeptide,
- ca. 110 % der von der DGE für die genannten Vitamine empfohlenen Tagesmenge,
- ca. 25 % der von der DGE für die genannten Mineralien empfohlenen Tagesmenge,
- ca. 80 % der von der DGE für die genannten Spurenelemente empfohlenen Tagesmenge,
- ca. 350 mg Phosphaditylserin,
- ca. 150 mg Phosphaditylcholin und
- ca. 170 mg L-Carnitin.

## Claims

1. Energy-fruit juice drink with the following additives:
- carbohydrates of fructose combined with oligofructose,
- proteins in the form of short-chain oligopeptides,
- vitamins of the C and B-complex,
- mineral substances and trace elements, as well as antioxidants,
**characterized by**
- phospholipids and L-carnitine.

2. Energy-fruit juice drink according to claim 1, **characterized in that** the oligopeptides contain at least nine of the following amino acids: tyrosine, phenyl analine, tryptophane, lysine, arginine, methionine, serine, isoleucine, leucine and glutamic acid.

3. Energy-fruit juice drink according to one of the preceding claims, **characterized in that** the vitamins are those of the C and B-complex, vitamin E, provitamin A, folic acid and pantothenic acid.

4. Energy-fruit juice drink according to one of the preceding claims, **characterized in that** the mineral substances are contained in magnesium lactate and calcium lactate.

5. Energy-fruit juice drink according to one of the preceding claims, **characterized in that** the trace elements are contained in zinc yeast, manganese yeast, chromium yeast and selenium yeast.

6. Energy-fruit juice drink according to one of the preceding claims, **characterized in that** the phospholipids are phosphatidyl serine and phosphatidyl choline.

7. Energy-fruit juice drink according to claim 6, **characterized in that** the phosphatidyl serine proportion to the phosphatidyl choline proportion is in the ratio 5:2.

8. Energy-fruit juice drink according to one of the preceding claims, **characterized by** the following composition, in which the indicated quantities in each case relate to the recommended daily dose:
- 3 to 15 g fructose,
- 3 to 10 g oligofructose,
- 5 to 15 g milk and/or whey protein,
- 3 to 10 g oligopeptides,
- 10 to 200% of the daily quantity of the indicated vitamins recommended by the DGE,
- 15 to 30% of the daily quantity of the indicated minerals recommended by the DGE,
- 10 to 100% of the daily quantity of the trace elements indicated by the DGE,
- 50 to 500 mg phosphatidyl serine,
- 20 to 200 mg phosphatidyl choline,
- 10 to 200 mg L-carnitine,
- topped up to 100 to 500 ml of fruit juice.

9. Energy-fruit juice drink in the 330 ml administration form according to claim 8, **characterized by** a composition with
- approx. 10 g fructose,
- approx. 8 g oligofructose,
- approx. 10 g milk and/or whey protein,
- approx. 6 g oligopeptides,
- approx. 110% of the daily quantity of the indicated vitamins recommended by the DGE,
- approx. 25% of the daily quantity of the indicated minerals recommended by the DGE,
- approx. 80% of the daily quantity of the indicated trace elements recommended by the DGE,
- approx. 350 mg phosphatidyl serine,
- approx. 150 mg phosphatidyl choline and
- approx. 170 mg L-carnitine.

## Revendications

1. Boisson énergétique à base de jus de fruits, comprenant les additifs suivants:
- hydrates de carbone tirés de fructose, en combinaison avec de l'oligo-fructose,
- protéines sous la forme d'oligopeptides à chaînes courtes,
- vitamines appartenant aux complexes C et B,
- substances minérales et oligoéléments, antioxydants,
**caractérisée par**
- des phospholipides et de la L-carnitine

2. Boisson énergétique à base de jus de fruits selon la revendication 1, **caractérisée en ce que** les oligopeptides contiennent au moins 9 des aminoacides mentionnés ci-après: tyrosine, phénylalanine, tryptophane, lysine, arginine, méthionine, sérine, isoleucine, leucine, acide glutamique,

3. Boisson énergétique à base de jus de fruits selon l'une des revendications précédentes, **caractérisée en ce que** les vitamines sont des vitamines du complexe C et du complexe B, de la vitamine E, de la provitamine A, de l'acide folique et de l'acide pantothénique.

4. Boisson énergétique à base de jus de fruits selon l'une des revendications précédentes, **caractérisée en ce que** les substances minérales sont contenues dans du lactate de magnésium et du lactate de calcium

5. Boisson énergétique à base de jus de fruits selon l'une des revendications précédentes, **caractérisée en ce que** les oligoéléments sont contenus dans la levure de zinc, la levure de manganèse, la levure de de chrome et la levure de sélénium.

6. Boisson énergétique à base de jus de fruits selon l'une des revendications précédentes, **caractérisée en ce que** les phospholipides sont de la phosphadityl sérine et de la phosphadityl choline.

7. Boisson énergétique à base de jus de fruits selon la revendication 6, **caractérisée en ce que** la quantité de phosphadityl sérine se situe dans le rapport de 5:2 par rapport à la quantité de phosphadityl choline.

8. Boisson énergétique à base de jus de fruits selon l'une des revendications précédentes, **caractérisée par** la composition suivante, dans laquelle les quantités indiquées se rapportent respectivement à la dose journalière recommandée:
- 3 à 15 g de fructose,
- 3 à 10 g d'oligofructose,
- 5 à 15 g de lait et / ou de protéines du lait
- 3 à 10 g d'oligopeptides
- 10 a 200 % de la quantité journalière, recommandée par la DGE pour les vitamines mentionnées
- 15 à 30 % de la quantité journalière, recommandée par la DGE pour les minéraux mentionnés
- 10 a 100 % de la quantité journalière, recommandée par la DGE pour les oligoéléments
- 50 à 500 mg de phosphadityl sérine
- 20 à 200 mg de phosphadityl choline
- 10 à 200 mg de L-carnitine
- complétée par 100 à 500 ml de jus de fruits

9. Boisson énergétique à base de jus de fruits en présentation de 330 ml selon la revendication 8, **caractérisée par** une composition comprenant
- env. 10 g de fructose
- env. 8 g d'oligofructose
- env. 10 g de lait et /ou de protéines du lait
- env. 6g d'oligopeptides,
- env. 110 % de la quantité journalière recommandée par la DGE pour les vitamines mentionnées
- env. 25 % de la quantité journalière recommandée par la DGE pour les minéraux mentionnés
- env. 80 % de la quantité journalière recommandée par la DGE pour les oligoéléments mentionnés
- env. 350 mg de phosphadityl sérine
- 150 mg de phosphadityl choline, et
- env. 170 mg de L-carnitine.
